(19) Europäisches Patentamt
European Patent Office
Office européen des brevets

(11) **EP 2 256 675 A1**

# (12) EUROPEAN PATENT APPLICATION

(43) Date of publication:
**01.12.2010 Bulletin 2010/48**

(51) Int Cl.:
*G06Q 10/00* (2006.01)　　　*G06Q 30/00* (2006.01)

(21) Application number: **10005320.6**

(22) Date of filing: **21.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **27.05.2009 IL 19902109**

(71) Applicant: **Deutsche Telekom AG**
**53113 Bonn (DE)**

(72) Inventors:
• **Gal-Oz, Nurit**
**Lehavim 85338 (IL)**

• **Grinsphoun, Tal**
**Beer Sheva 84719 (IL)**
• **Gudes, Ehud**
**Beer Sheva 84716 (IL)**
• **Meisels, Amnon**
**Omer 84965 (IL)**

(74) Representative: **Flaccus, Rolf-Dieter**
**Flaccus · Müller-Wolff**
**Patentanwälte**
**Bussardweg 10**
**50389 Wesseling (DE)**

(54) **A method and system for sharing reputation knowledge across virtual communities**

(57) In a first aspect the present invention is a method for computing a Cross-Community Reputation (CCR). A community that wishes to receive CCR data regarding one of its users sends a request to relevant communities either directly or through a trusted third party. Communities that have reputation data of the user and are willing to share the information, reply with the relevant reputation data. All the received data is assembled together into an object containing the CCR data of the user in the context of the requesting community. In a second aspect the present invention is a computer and communication system for computing and exchanging trust and reputation in virtual communities. This system is adapted to automatically allow the method of the first aspect of the invention to be carried out. In its core the system of the invention consists of computing and communication devices adapted to enable realization of two fundamental computational models - one for the internal reputation within each community and one for the sharing of reputation knowledge across communities.

Fig. 1

EP 2 256 675 A1

**Description**

**Field of the Invention**

The present invention is related to the field of communication over the Internet. Specifically the invention relates to methods of establishing trust amongst the members of the online communities and even more specifically the invention relates to methods of sharing the reputation that a user has earned in one community with other communities.

**Background of the Invention**

Publications and other reference materials referred to herein, including reference cited therein, are incorporated herein by reference in their entirety and are numerically referenced in the following text and respectively grouped in the appended Bibliography which immediately precedes the claims.

Virtual or online communities are any group of people interacting with each other via the Internet for a common goal or shared interest. Different classes of virtual communities include marketplaces, social networks, expert communities, and online games. The existence of easily accessible virtual communities makes it both possible and legitimate to communicate with total strangers that may turn out to be dishonest.

Trust and reputation systems attain widespread interest as the main tool for enabling safe operation within online communities. The key objective of these systems is to obtain and maintain measures of trust between members of communities based on their behavior during community activities. Trust and reputation models may differ in how they define the terms trust and reputation, in their assumptions on how the system obtains data on trust relationships, and in the algorithms they use to compute trust and reputation. Without being committed to specific definitions of trust and of reputation for the sake of this discussion these terms are defined herein as:

- trust is a one to one relationship between two entities (users, groups of users)
- reputation is a many to one relationship inferred by aggregation, from a group of entities that are the relying party to a single entity that is the trusted party.

Information sharing is a key objective in the age of Internet and virtual communities. Considering reputation information as part of a user's identity makes it both a sensitive and a desire data for communities to share. At the same time, a reputation that a user has gained at some point in time can leverage her state in new communities. Several researchers have studied the issue of transferring reputation data between agents. Pinyol and his colleagues [6] propose the use of a common ontology in order to exchange reputation between agents. Several preliminary ideas for translating recommendations are proposed in [1]. The exchange and translation of reputation data should not necessarily be bound to a pair of agents. For instance, communities that employ trust and reputation systems gain knowledge about the reputation of their users. Exchange of such reputation is a valuable resource both for the users and for the communities. *Cross-Community Reputation* (CCR) can be achieved by sharing and combining reputation data from different communities [2,5].

The main advantages of using CCR are:

- Leverage reputation data from multiple communities in order to produce more accurate recommendations. This is especially important when users are active in several communities and may receive different valuations in those communities.

- Reputation accumulation - A user does not have to build reputation from scratch when joining a new community.
- Users are able to maintain (either global or community-specific) offline reputation certificates. This is known as *reputation capital*.
- Faster establishment of new virtual communities by importing reputation data from related communities. In group-oriented trust and reputation models [3] exporting local reputation values speeds up the process of identifying clusters of trusting members.

The task of computing CCR is complex. Each community has its own way of perceiving reputation and computing it and may include different factors in its reputation mechanism. In order to compare between different mechanisms the following basic properties of trust relations as proposed in [4] are amongst the many that must be considered:

- *Measure* - the value domain of the reputation score;
- *Trust context*- the context to which a reputation score is assigned;
- *Certainty* - a measure expressing the level of confidence a community has in the firmness of the reputation level.

Except for the articles already mentioned above, there is not much current literature on cross-community reputation. The problem of providing privacy while transferring reputation from one community to another was investigated by [5]. Some commercial products provide a very simple notion of cross-community reputation, e.g. iKarma, which does not exhibit the complexities of the concept as presented herein.

It is therefore a purpose of the present invention to provide a method for converting and assembling reputation data from several virtual communities to enable sharing of reputation knowledge across them.

It is another purpose of the present invention to provide a computer and communication system for carrying out a method for converting and assembling reputation data from several virtual communities to enable sharing of reputation knowledge across them.

Further purposes and advantages of this invention will appear as the description proceeds.

## Summary of the Invention

In a first aspect the invention is a method of converting and assembling reputation data from several virtual communities to determine a Cross-Community Reputation (CCR), thereby enabling sharing of reputation knowledge across the communities. The method comprises three stages: preconditions, conversion of reputation values, and attribute matching.

The method of the invention is carried out by following the steps:

a. a community that wishes to receive CCR data regarding one of its users sends a request to relevant communities;
b. communities that have reputation data of the user and are willing to share the information, reply with the relevant reputation data;
c. the requesting community decides upon the level of confidence it has in each of the responding communities;
d. a set of generic attributes is defined;
e. the received reputation scores are converted to the value domain of the requesting community;
f. the attributes and their corresponding scores from the responding communities are mapped to the set of generic attributes;
g. the attributes and their corresponding scores from the responding communities are mapped to fit the attributes of the requesting community;
h. the certainty of each calculated attribute CCR value is calculated as a combination of the confidence levels and the matching levels of the communities' attributes; and
i. the CCR data is compiled together.

The communities can communicate with each other through a trusted third party.

According to embodiments of the method of the invention the confidence one community has in another is determined by: Explicit Assertion, Category Matching level, and Domain Confidence.

According to embodiments of the method of the invention Explicit Assertions can be defined either: manually by an administrator; or automatically according to statistical information pointing out the significance of one community as a source of reputation for another community; or manually by a user.

According to embodiments of the method of the invention Explicit Assertions override any other confidence computation.

According to embodiments of the method of the invention the Category Matching level can be determined by using either the Dice correlation or algorithms for document matching based on the vector space model.

According to embodiments of the method of the invention communities and users are enabled to define their own policies with respect to the level and type of information they are willing to reveal.

In a second aspect the invention is a computer and communication system comprising computing and communication devices adapted to automatically carry out the method of the first aspect in order to compute and exchange trust and reputation in virtual communities. The components of the system are collectively known as TRIC server, which is comprised of the following three building blocks:

a. The Registrar, which is adapted to provide registration services for both users and communities;
b. The Trust and Reputation Provider (T&RP), which is adapted to provide reputation computation services for obtaining the internal reputation of a user within a community; and
c. The Cross-Community Reputation Provider (CCRP), which is adapted to provide cross-community reputations of registered users to registered communities.

The TRIC server is adapted to automatically handle a request for the CCR of a user as follows:

a. TRIC is adapted to receive a request from a requesting community for the CCR of a user;
b. TRIC is adapted to compile a request to potential responding communities;
c. TRIC is adapted to submit the request to all potential responding communities;
d. TRIC is adapted to receive a reputation object of the user from responding communities;
e. TRIC is adapted to process all of the reputation objects and to compile a CCR object; and
f. TRIC is adapted to send the CCR object to the requesting community.

All the above and other characteristics and advantages of the invention will be further understood through the following illustrative and non-limitative description of preferred embodiments thereof, with reference to the appended drawings.

## Brief Description of the Drawings

- Fig. 1 schematically shows these four layers and the connections between them of the system of the invention for computing and exchanging trust and reputation in virtual communities;
- Fig. 2 schematically describes the CCR process using TRIC;
- Fig. 3. symbolically shows the three building blocks of the TRIC server; and
- Fig. 4 is a sequence diagram that schematically describes the user-registration process.

## Detailed Description of Preferred Embodiments

In a first aspect the present invention is a method for computing a Cross-Community Reputation (CCR). A community that wishes to receive CCR data regarding one of its users sends a request to relevant communities either directly or through a trusted third party. Communities that have reputation data of the user and are willing to share the information, reply with the relevant reputation data. All the received data is assembled together into an object containing the CCR data of the user in the context of the requesting community.

Before the data received from the various responding communities is assembled together, the requesting community must decide upon the level of confidence it has in each of the responding communities. This level is decided according to the similarity of the communities' categorization (an aspect of the *trust context* property), the conversion uncertainty imposed by different value domains (an aspect of the *measure* property), or simply by an explicit assertion. The higher the confidence level of the responding community, the bigger the influence of that community's data in the CCR computation.

In a second aspect the present invention is a computer and communication system for computing and exchanging trust and reputation in virtual. communities. This system is adapted to automatically allow the method of the first aspect of the invention to be carried out. The system of the invention is identified herein by the acronym TRIC (Trust and Reputation In virtual Communities). In its core TRIC consists of computing and communication devices adapted to enable realization of two fundamental computational models - one for the internal reputation within each community and one for the sharing of reputation knowledge across communities. TRIC can use any Trust and Reputation (T&R) model for the computation of the internal reputation within each of the communities.

In the current embodiment of TRIC the use of the Knot model [3] is assumed for computing the internal reputation, but this does not limit the generality of the system. TRIC is adapted to use the CCR model of the invention described herein above for the computation of shared reputation knowledge across different communities.

Reputation is a complex term that cannot always be quantified into a single value, but is rather composed of several *attributes.* In order to provide a common and agreeable notion of reputation the inventors specify the need for a set of generic attributes. A virtual community should follow this set of attributes, or at least define a mapping from its own internal attributes to the generic set. For instance, a generic set for virtual marketplaces may include the following attributes - *Reliability, Promptness*, *Customer Service, Warranty*, and *Price.* Existing communities may already have their own attributes for reputation. For instance, eBay has four criteria by which a seller is rated - *Item as Described, Communication, Shipping Time,* and *Shipping and Handling Charges.* In order to enable CCR with eBay, a mapping between eBay's criteria and the set of generic attributes must be added. One must note that attribute matching is a general problem that appears in many domains such as Semantic Integration, Schema Matching and Ontology-based Web Search; however, the inventors know of no case in which it has been applied to cross-community reputation.

Before the attributes of the responding communities are mapped and computed, the received reputation scores are converted to the value domain of the requesting community - an aspect of the *measure* property. At this stage, the attributes and their corresponding scores are mapped to the set of generic attributes. Next, they are mapped again to fit the attributes of the requesting community - an aspect of the *trust context* property. The certainty of each calculated attribute CCR value is an additional information item (the *certainty* property). This certainty is calculated as a combination of the confidence levels and the matching levels of the communities' attributes. Finally, the CCR data is compiled together. The CCR method of the invention inherently supports policies specified by both communities and users.

The assumed scenario is of a user active in several communities that each maintains her internal reputation. The communities are willing to share reputation data and some other community related meta-features in order to enable a precise and reliable computation of CCR.

The CCR method of the invention consists of three major stages: preconditions, conversion of reputation values and attribute matching. These stages must be performed for each pair of communities that wish to enable CCR between them. While the first stage is performed only rarely, the stages of conversion of reputation and attribute matching take place in every request for CCR. Additionally, reputation data privacy issues are controlled through policies defined by both the user whose CCR is being sought, and the community that applies for her CCR.

The major actors and entities involved are defined as follows:

- *CCR service* - a service provided to communities and users by a third party to enable sharing of reputation information between communities.
- *Communities* - a community $\in$ *CCRcom* is a community registered for the CCR service that uses some trust and reputation model to evaluate its users' reputation internally.
- *User* - a user $\in$ *Users* is a person participating in one or more communities in *CCRcom*, registered for the CCR service.
- *CCR Request* - A request issued by a community for the CCR value of one of its users.
- *Requesting Community* - a community $\in$ *CCRcom* that initiates a request for the CCR of one of its users.
- *Responding Community* - a community $\in$ *CCRcom* capable of providing a reputation value for any of its users, in response for a CCR request. Any of the communities may act as a requesting community in some CCR requests, and as a responding community in others.

The cross community reputation method of the invention enables communities to anonymously participate and share information with other communities. Inherent with the benefits of having a wider reputation base, there is a risk of getting inadequate information from communities that are not compatible or relevant for some reason. To minimize this risk confidence values that express the level of trust each community has in another are maintained. The confidence value can reduce the impact of communities with low confidence in the CCR computation. The confidence value of one community in another is a unique value inferred from the nature of the two communities and statistical information collected on past CCR computations.

**Definition 1.** *Confidence*(*A*,*B*) is a number in the range of [0,1] representing the extent to which a requesting community *A* considers the input from a responding community *B* as relevant and valuable for CCR computation.

A confidence level lower than a predefined confidence threshold implies that the community is unreliable and cannot serve as a responding community. Any other value of confidence is used as the community's weight when combining reputation scores from different communities, as will be shown herein below. Each community may explicitly express its subjective confidence level in other communities. The confidence one community has in another is determined by three factors: *Explicit Assertion, Category Matching level*, and *Domain Confidence.*

**Definition 2.** *Explicit Assertion* is a *confidence* value explicitly provided by a representative of a community with respect to another community.

Explicit assertions may be viewed as a means to create "black lists" of communities perceived as incompatible on any grounds (e.g., ethical, political, etc.) and "white lists" of communities that are considered valuable (e.g., professional, popular, etc.). Therefore, explicit assertions are either used to block some reputation inputs or to enforce the use of other reputation inputs regardless of any computational result.

Explicit assertions can be edited either manually by an administrator or automatically according to statistical information pointing out the significance of one community as a source of reputation for another community. Explicit assertions override any other confidence computation.

For each community $A \in$ *CCRcom* there is a set of assertions (possibly an empty set) denoted by *ExpAssertions* (*A*) of explicit confidence statements:

$$ExpAssertions(A) =$$
$$\{(ExpConf(A,B_i)) \mid ExpConf(A,B_i) \in [0,1], A,B \in CCRcom, A \neq B\} \qquad (1)$$

Being the subject of a CCR request, a user can also define a set of explicit assertions with respect to some communities. In this case the two sets are unified.

A community may belong to one or more categories representing aspects of its activity. Communities belonging to the same category are more likely to rely on reputations they exchange, assuming the motivation and user ranking criteria they use are similar. A simple approach for community categories matching is to characterize them by keywords. The characterization of a community consists of the set of keywords that correspond best with the activities of the community. These keywords may be taken from the community's web pages meta-tags (routinely used for promoting placement in search engines).

**Definition 3.** *Category Matching level* is a value in [0,1] representing the correlation of two communities based on their categories as described by keywords.

One of the association measures commonly used in information retrieval for keywords based matching, is the Dice Correlation Coefficient. Let *CM* be the category matching function, *KW*(*A*),*KW*(*B*) two sets of keywords representing Communities *A and B* respectively, then using the Dice correlation:

$$CM(A,B) = \frac{2 \mid KW(A) \bigcap KW(B) \mid}{\mid KW(A) \mid + \mid KW(B) \mid} \qquad (2)$$

Other approaches for automatic community categorization and category matching level detection that can be used with the method of the invention include algorithms for document matching based on the vector space model. In these algorithms, documents are represented as vectors where each element is associated with a word in a predefined vocabulary. In the method of the invention communities' web pages, e.g. the "About" page, may provide the content of these documents. Each word in the vocabulary of a community vector is assigned a weight representing its importance to the community, and considering its importance within all communities in CCRcom, e.g. using the TF-IDF measure.

Communities use various reputation models that may each utilize a different representation of reputation values. Cross-community reputation exchange may require conversion from one domain of values to another. However, some domains are more granular than others and provide a more precise representation that may be compromised when computed by conversion from a less precise representation. In this case, the confidence in the accuracy of the converted value decreases.

Pinyol *et al.* [6] address this problem as part of the reputation ontology and mapping mechanism that they introduce. The present invention adopts a relaxed version of this approach and focuses on the following four domains of reputation representation:

- boolean (*BO*);
- a discrete set of 5 values (*DS*5);
- a discrete set of 10 values (*DS*10);
- real numbers bounded by a predefined range of [0,1] (*RE*).

All four domains are considered as discrete sets characterizing the domain of real numbers by using 100 possible values. They assign an uncertainty value to every possible conversion from one domain to another, reflecting the possible loss of data caused by the conversion. The computation is based on the Shannon entropy of each one of the domains considered. The entropy of conversion is computed by summing up all conditional entropies of a variable in the target domain given every possible value in the source domain (for details see [6]).

Table 1(a) is a generic table presenting the Conversion Uncertainty (CU) resulting from conversion of reputation values from one domain to another, based on the entropies of the source and target domains. The table shows that although there is no information loss when converting from a more general domain (e.g. Boolean) to a more expressive domain (e.g. Real), the conversion injects some uncertainty to the values on the target domain. This results from the fact that there may be more than a single value in the target domain that could have been selected to represent a single value in the source domain. Clearly, a community should not ignore inputs from another community based solely on reputation representation differences. On the other hand, it should be able to express the fact that these inputs are approximated.

**Table 1 (a)**

|     | BO  | DS5  | DS10 | RE   |
| --- | --- | ---- | ---- | ---- |
| BO  | 0   | 1.29 | 2.32 | 5.64 |

(continued)

|      | BO | DS5 | DS10 | RE   |
|------|----|-----|------|------|
| DS5  | 0  | 0   | 1    | 4.32 |
| DS10 | 0  | 0   | 0    | 3.32 |
| RE   | 0  | 0   | 0    | 0    |

**Definition 4.** *Domain Confidence* is a value in [0,1] representing the extent to which one community considers the input from another community as precise, based on conversion uncertainty.

Based on conversion uncertainty, the maximum confidence MaxC a community has when accepting an input is defined from the most general domain (BO) to the most expressive domain (RE), i.e., when the potential loss of information is the highest. Formally, the domain confidence (DC) of community A in community B is inferred based on the conversion uncertainty CU(A,B) as follows:

$$DC(A,B) = 1 - \frac{CU(A,B)}{CU(BO,RE)} \cdot (1 - MaxC) \qquad (3)$$

Table 1 (b) summarizes the domain confidence values using *MaxC* = 0.5.

**Table 1 (b)**

|      | BO | DS5 | DS10 | RE   |
|------|----|-----|------|------|
| BO   | 1  | 0.89 | 0.79 | 0.5  |
| DS5  | 1  | 1   | 0.91 | 0.62 |
| DS10 | 1  | 1   | 1    | 0.7  |
| RE   | 1  | 1   | 1    | 1    |

Explicit assertions are subjective statements that may or may not agree with the information inferred by comparing community categories or other aspects of reputation mechanisms. They may be motivated by the will to be influenced by certain communities considered prestigious or professional, as one may wish her own community to be. According to the method of the invention, explicit assertions override any other information regarding the confidence of one community in another. In the absence of an explicit assertion both domain confidence and category matching level are considered when calculating the confidence of a requesting community in a responding community. The confidence value is used first to filter out communities previously identified as unreliable sources for reputation, i.e. responding communities with confidence value below the required confidence threshold. For responding communities that passed that filter, the confidence of the requesting community in the responding community is used as a weight factor, reflecting the importance of the inputs provided by that responding community relative to inputs provided by others.

$$Confidence(A,B) = \begin{cases} ExpConf(A,B), & ExpConf(A,B) \in ExpAssertions(A) \\ CM(A,B) \cdot DC(A,B), & otherwise \end{cases} \qquad (4)$$

Due to differences in reputation representation in different communities, reputation values from responding communities must be converted to values in the requesting community's domain before they can be used. The present invention adopts the mapping approach proposed by Pinyol *et al*. [6] to carry out this conversion and provides a simplified version of this approach. Mapping from one discrete set domain to another involves partitioning the more specific set to subsets. The number of subsets is determined by the cardinality of the less specific set. The mapping is then straightforward from a value that belongs to the $i^{th}$ subset in one domain to the $i^{th}$ value of the second domain and vice versa (the median of each subset may represent it for this matter).

The mapping is formalized as follows: Assume that a discrete set of n values *DSn,* is an ordered set of n values labeled as 0, ... , $n$-1. Let $DSm,DSn$ be two discrete sets of size m, n respectively $m < n$. Let $DSSn(i)$, $i = 0, ..., m$-1 be $m$ disjoint ordered sub sets of the set $DSn$ such that for any two items labeled as $k$, $1$, where $k \in DSSn(i)$, $1 \in DSSn(j)$; $k < 1 \Rightarrow i < j$.

If $v \in DSSn(i)$ and $minLabe1(DSSn(i)), maxLabe1(DSSn(i))$ are the smallest and largest labels in $DSSni(i)$ then:

$$domainMap(v, n, m) = i,$$
$$domainMap(i, m, n) = median(\min Label(DSS_n(i)), \max Label(DSS_n(i))). \qquad (5)$$

The cardinality of each subset is not necessarily the same and may be subject to additional information about the domain. For example, a discrete set of 5 values $\{A,B,C,D,F\}$ reflecting the ECTS grading system may be mapped to a discrete set of 100 values using the following partition: {90-100}, {80-89}, {70-79}, {60-69}, {1-59}.

A reputation score can be more meaningful when the distribution of ratings in the community it originated from is known. The same reputation score can be perceived as exceptionally high or as an average popular score, under different distributions. The standard score of a variable in a given distribution indicates its location (distance from the mean) within this distribution in units of standard deviation. Adjusting a reputation value provided by a responding community to preserve its standard score ensures that the value will be equivalently positioned within the distribution of the requesting community. This adjustment is done under the assumption of normal distribution in both communities and only after a cross domain conversion.

Let $v$ be a reputation value provided by a responding community B, Z($v$) be the standard score of $v$, and $\sigma_A$, $\mu_A$ the standard deviation and mean of the ratings in community A. $v$ is adjusted in community A as follows:

$$StatAdj(v,A) = (Z(v) \cdot \sigma_A) + \mu_A \qquad (6)$$

Reputation is usually represented by more than a single value. The rating criteria used within a community to evaluate a transaction serve as the set of attributes describing the reputation. An attribute in one community may have the same meaning as an attribute in another community even if they are labeled differently. On the other hand, the meaning of an attribute may be only partially (or not at all) analogous to the meaning of one or more attributes used by a different community.

To obtain the relative contribution of an attribute of one community to the CCR computation of another community's attribute, a set of generic attributes is defined. Each community provides a mapping of its attributes to the relevant generic attributes. This mapping specifies the generic attributes that match each of the community's attributes and the level of matching. This information along with the actual attribute scores provided by the responding communities enables the computation of the CCR attribute scores and the level of certainty one has in the firmness of each one of these scores.

**Definition 5.** *Matching Level* is a number in the range [0,1] specifying the extent to which the meaning of one attribute is considered analogous to that of another attribute.

Let $GenericAtt = \{GAtt_1, ... ,GAtt_n\}$ be the set of generic attributes, and let $\{Att(A)_1, ... ,Att(A)_s\}$ be the set of attributes used in a requesting community A. For each Attribute $Att(A)_i$, $i = 1...s$ there is a mapping to each attribute in $GenericAtt$ that it matches denoted by $Att(A)_i.ML(GAtt_j)$.

The process of computing the score and the certainty of an attribute of the requesting community has two parts. In the first, the score and the certainty of each of the relevant generic attributes are evaluated from their matching attributes in the responding communities. In the second part, the score and the certainty of the attribute under consideration are evaluated from the generic attributes' scores and certainties as computed in the first part.

Let $\{Att(B_i)_1,...,Att(B_i)_{Si}\}$ be the sets of attributes of $B_i \in B_{res}$, the set of responding communities that passed the confidence threshold for A. The certainty and score of the generic attribute $GAtt_j \in GenericAtt$ with respect to Community A is given by:

$$GAtt_j(A).Certain = \sum_{B_i \in B_{res}} \sum_{l=1}^{Si} Att(B_i)_l.ML(GAtt_j) \cdot Confidence(A, B_i) \qquad (7)$$

$$GAtt_j(A).Score = \frac{\sum_{B_i \in B_{res}} \sum_{l=1}^{Si} Att(B_i)_l.Score \cdot Att(B_i)_l.ML(GAtt_j) \cdot Confidence(A,B_i)}{GAtt_j(A).Certain} \qquad (8)$$

To compute the score and certainty of an attribute $Att(A)_k$ only the set of generic attributes that match it with matching level >0 denoted by $GenAtt(Att(A)_k)$ is used.

$$CCR.Att(A)_k.Certain = \sum_{GAtt_j \in GenAtt(Att(A)_K)} Att(A)_k.ML(GAtt_j) \cdot GAtt_j(A).Certain \qquad (9)$$

$$CCR.Att(A)_k.Score = \frac{\sum_{GAtt_j \in GenAtt(Att(A)_K)} GAtt_j.Score \cdot Att(A)_k.ML(GAtt_j) \cdot GAtt_j(A).Certain}{CCR.Att(A)_k.Certain} \qquad (10)$$

It is assumed that the domain of values of all attributes within a community is the same and aligned with the domain of the aggregated reputation value. The conversion stage described herein above (equations (5) and (6)) must be applied to every attribute score provided by a responding community before the above computation is carried out.

A *reputation object* provided by a community contains in addition to the single reputation score, information related to the attributes of that community (score and certainty) and statistical information related to the reputation value (e.g., its standard score). A reputation object may also include textual comments written by users who have rated the user that is the subject of the reputation object.

A CCR object is a reputation object containing the aggregated attributes values (score and certainty) that are computed from all responding communities. It also contains a CCR single score computed from the CCR attribute values using the attributes-weights assigned by the requesting community.

Let $w_1,.., w_n$ be the weights that the requesting community A assigns to its reputation attributes $Att_1, ..,Att_n$ respectively

$$CCR.SingleScore = \frac{\sum_{i=1}^{n} CCR.Att(A)_i.Score \cdot w_i}{\sum_{i=1}^{n} w_i} \qquad (11)$$

In addition an inscrutable reputation that ignores attribute information is determined. It is calculated as a weighted average of all single reputation scores provided by the responding communities, weighted by the confidence that the requesting community has in them:

$$CCR.Inscrutablereputation = \frac{\sum_{i \in B} Confidence(A,B_i) \cdot B_i.Re\,putationScore}{\sum_{i \in B} Confidence(A,B_i)} \qquad (12)$$

This score is important when there are relatively few attributes in the responding community that match the attributes of the requesting community. Unlike the CCR single score, it is insensitive to the internal representation of the responding communities' reputation scores and it does not express the weights of reputation attributes.

In addition to the actual computation of CCR, communities and users are enabled to define their own policies with respect to the level and type of information they are willing to reveal in addition to a single aggregated reputation score. Each community may define a policy in which it specifies whether, as a responding community, it allows the sharing of reputation attributes, the identity of the community, additional textual comments that users attach to ratings, etc. Similarly, each user may define her own policy in any community she belongs to, to be used when the community takes the role of a responding community. These policies are unified to reflect the most restrictive policy and are used when compiling the final CCR Object. Privacy restrictions may affect the level of drill down available from the compiled CCR to the input provided by each of the responding communities. The CCR object returned to the requesting community will consist of at least a single reputation value. All other information may be restricted by the unified policies. Choosing between open and closed policies impacts the reliability of the CCR value.

The Cross-Community Reputation method of the invention enables sharing of reputation knowledge across virtual communities. As can be understood from the description herein, sharing reputation is a complex task since each virtual community has a different reputation mechanism. The CCR method of the invention facilitates a formal method to convert and assemble reputation data from several communities. The method consists of three main stages: preconditions, conversion of reputation values, and attribute matching.

The introduced ability of transferring reputation data gives motivation to include reputation as part of a user's identity. With the usage of CCR, users can obtain reputation capital in the form of offline reputation certificates. In some communities users can also have some effect on the CCR computation by applying their own privacy policies, such as maintaining anonymity, in addition to the community's policies. Users can also deny undesirable communities from taking part in their CCR computation by *black-listing* them. This is done by giving a zero explicit assertion to a disagreeable community. These features turn the CCR method of the invention into a more user-centric scheme.

In order to enable CCR, one must make sure that the user registered in the two (or more) communities is the same user. This must be done without compromising the user's anonymity in the community and with the requirement of unlinkability between the communities. Using standard identity providers, e.g. OpenID, enables the user to control the identity she provides to the communities and to the CCR provider.

The embodiment of the invention described hereinabove considers the *measure, trust context*, and *certainty* properties of trust relations when calculating CCR. However, some properties such as the *directness* of trust and the *time decay* were left out of the computation, since it is not clear how they can be quantified. The *directness* of trust should have only a negligible effect on the overall confidence level between communities in comparison to other properties such as *measure* and *trust context*. However, *time decay,* which is part of the reputation mechanism of some virtual communities, e.g. Amazon, may have a considerably greater impact on the computation. Consequently, time-dependency is to be included in more advanced embodiments of the invention.

## Example:

This example is based on three well known communities that deal with hotel recommendations - TripAdvisor, Expedia, and Booking.com. A description of the generic attributes and the communities follows:

- Generic Attributes - A set of 6 generic attributes common for the hotel recommendations domain are used: Comfort, Clean, Maintenance, Staff, Extra Services (ESer), and Value.
- TripAdvisor - Rooms, Service, Value, Cleanliness, and Dining are the attributes by which a hotel is rated in TripAdvisor (TA). In order to enable CCR with TripAdvisor, a mapping from TripAdvisor's attributes to the generic attributes should be added. Some attributes can differ solely by their names making the mapping trivial, e.g., $Clean_{(Generic)} \leftarrow Cleanliness_{(TA)}$.

Other attributes might have a partial correlation between them, e.g. $Comfort_{(Generic)} \leftarrow 0.9 \cdot Rooms_{(TA)}$, $Maintenance_{(Generic)} \leftarrow 0.2 \cdot Rooms_{(TA)}$. Extra Services can be considered as a combination of Dining and Service ($ESer_{(Generic)} \leftarrow 0.7 \, Dining_{(TA)} + 0.3 \cdot Service_{(TA)}$). TA presents the reputation scores as stars (including half-stars), so it uses a DS10 value domain.

- Expedia - The attributes used to rank the hotels in Expedia are Hotel Service (HSer), Hotel Condition (HCon), Room Cleanliness (RC1e), and Room Comfort (RCom). Notice that some generic attributes may have no mapping at all from a particular community (Value in the case of Expedia). Expedia presents the reputation scores as real numbers ranging from 0 to 5, so it uses a DS5O value domain.
- Booking.com - The attributes used to rank the hotels in Booking.com are Staff, Services, Clean, Comfort, and Value For Money (VFM). Booking.com presents the reputation scores as real numbers ranging from 0 to 10, so it uses a RE value domain.

First the level of confidence between each pair of communities is determined. For clarity the example is simplified by making several assumptions. First, it is assumed that in all three communities, a rating of zero does not exist. Second full category matching and similar reputation mechanisms except for the value domains are assumed. These assumptions are reasonable, since all of the discussed communities are websites that deal with hotel recommendations. The absence of explicit assertions is also assumed. Table 2 presents the domain confidence as derived from the values in Table 1 (b). Due to the assumptions, the values in Table 2 determine the level of confidence between the communities.

**Table 2**

|  | TripAdvisor | Expedia | Booking.com |
|---|---|---|---|
| TripAdvisor | - | 0.79 | 0.71 |
| Expedia | 1 | - | 0.91 |
| Booking.com | 1 | 1 | - |

Consider three hotels in Milan, Italy - Enterprise Hotel (HI), Brunelleschi Hotel (H2), and Ripamontidue Hotel (H3). H1 and H2 are popular hotels that appear in all 3 communities, while H3 can only be found in TripAdvisor and Expedia. Tables 3 (a) to 3 (c) show the reputation scores of the hotels in the TripAdvisor, Expedia, and Booking.com communities respectively. Table 4 summarizes the attribute mappings of all the communities in the example.

**Table 3 (a)**

|  | H1 | H2 | H3 |
|---|---|---|---|
| Rooms | 4 | 3.5 | 3.5 |
| Service | 4.5 | 3.5 | 3.5 |
| Value | 4.5 | 3.5 | 3.5 |
| Cleanliness | 4.5 | 4 | 3.5 |
| Dining | 3.5 | 4 | 3 |

**Table 3 (b)**

|  | H1 | H2 | H3 |
|---|---|---|---|
| Hotel Service | 4.8 | 4.2 | 4.2 |
| Hotel Condition | 4.8 | 4.2 | 4.5 |
| Room Cleanliness | 4.7 | 4.5 | 4.5 |
| Room Comfort | 4.4 | 4.2 | 4.2 |

**Table 3 (c)**

|  | H1 | H2 |
|---|---|---|
| Staff | 8.3 | 8.0 |
| Services | 8.2 | 7.8 |
| Clean | 8.6 | 8.3 |
| Comfort | 8.3 | 7.8 |
| Value For Money | 7.7 | 7.3 |

**Table 4**

| Generic | TripAdvisor | Expedia | Booking.com |
|---|---|---|---|
| Att1 (Comfort) | Rooms (0.9) | RCom | Comfort |
| Att2 (Clean) | Cleanliness | RCle | Clean |
| Att3 (Maintenance) | Rooms (0.2) | HCon (0.8) |  |

(continued)

| Generic | TripAdvisor | Expedia | Booking.com |
|---|---|---|---|
| Att4 (Staff) | Service (0.9) | HSer (0.5) | Staff |
| Att5 (ESer) | Dining (0.7) Service (0.3) | HSer (0.4) | Services |
| Att6 (Value) | Value | | VFM |

Consider Expedia that requests CCR for the Enterprise Hotel. There are two communities that can respond to this request - TripAdvisor and Booking.com. In its request, Expedia needs data only for the generic attributes Att1-Att5, since it has no internal attribute that is mapped to the generic attribute Att6 (see Table 4).

The computation of the CCR certainty for the generic attribute Att1 (Comfort) is as follows:

$$Att1.Certain = Rooms_{(TA)}.ML \cdot TA.Conf + Comfort_{(Booking)}.ML \cdot Booking.Conf$$
$$= 0.9 \cdot 0.79 + 1.0 \cdot 1.0 = 1.71$$

This computation incorporates the level of confidence (*Conf*) of the relevant responding communities and the Matching Level (*ML*) of each internal attribute that is mapped to Attl (see Table 4). The computed certainty is also a part of the CCR score computation; specifically its usage is in normalizing the computation:

$$Att1.Score = \frac{Rooms_{(TA)}.Score \cdot Rooms_{(TA)}ML \cdot TA.Conf}{Att1.Certain} +$$
$$\frac{Comfort_{(Booking)}.Score \cdot Comfort_{(Booking)}.ML \cdot Booking.Conf}{Att1.Certain} =$$
$$\frac{0.75 \cdot 0.9 \cdot 0.79 + 0.83 \cdot 1.0 \cdot 1.0}{1.71} = 0.8$$

The values (*Val*) used in this computation are already converted to RE (see Formula 5). For simplicity, the scaling of reputation scores by statistics is disregarded (a normal distribution in all the communities is assumed). The CCR certainty and score for the rest of the relevant generic attributes are determined in a similar manner:

Att2. *Certain* = 1.79 , Att2.Score = 0.86
Att3. *Certain* = 0.16 , Att3 Score = 0.75
Att4. *Certain* = 1.71 , Att4.Score = 0.84
Att5. *Certain* = 1.79 , Att5.Score = 0.77

Using the calculated certainties and scores for the generic attributes, the corresponding data can be now computed for the internal attributes of the requesting community Expedia. First, the CCR certainty for the inner attribute (for example, Hotel Service) is calculated:

$$HSer_{(Expedia)}.Certain = HSer(Att4).ML \cdot Att4.Certain +$$
$$HSer(Att5).ML \cdot Att5.Certain = 0.5 \cdot 1.71 + 0.4 \cdot 1.79 = 1.57$$

The computed certainty is also a part of the CCR score computation, specifically its usage is in normalizing the computation:

$$HSer_{(Expedia)}.Score =$$

$$\frac{Att4.Score \cdot HSer(Att4).ML \cdot Att4.Certain}{HSer_{(Expedia)}.Certain} + \frac{Att5.Score \cdot HSer(Att5).ML \cdot Att5.Certain}{HSer_{(Expedia)}.Certain}$$

$$= \frac{0.84 \cdot 0.5 \cdot 1.71 + 0.77 \cdot 0.4 \cdot 1.79}{1.57} = 0.81$$

The CCR certainty and score are computed for the rest of the internal attributes in a similar manner:

$HCon_{(Expedia)}.Certain = 0.13$ , $HCon_{(Expedia)}.Score = 0.75$
$RCle_{(Expedia)}.Certain = 1.79$ , $RCle_{(Expedia)}.Score = 0.86$
$RCom_{(Expedia)}.Certain = 1.71$ , $RCom_{(Expedia)}.Score = 0.8$

After the CCR computation is complete, a query about the Enterprise Hotel within the Expedia website can produce the output presented in Table 5. Such an output is subject to the display and privacy policies of the website. In this example the world includes only 3 communities, so a certainty value of 1.57 may be considered high, while the value around 0.13 can be considered as low CCR certainty.

**Table 5**

| Attribute | Inner Score | CCR Score | CCR Certainty |
|---|---|---|---|
| Hotel Service | 4.8 | 4.1 | High |
| Hotel Condition | 4.8 | 3.8 | Low |
| Room Cleanliness | 4.7 | 4.3 | High |
| Room Comfort | 4.4 | 4.0 | High |

Using the additional data enabled by the usage of CCR, the users in Expedia can see that the Enterprise Hotel is in fact not as good as the limited inner reputation in Expedia shows. The hotel's score in Expedia is based on only around 10 ratings, while in the other websites it is based on over 100 ratings each.

Another important usage of CCR is in bootstrapping the reputation data in new communities or for new hotels in existing communities. As an example, if Booking.com decides to start working with the Ripamontidue Hotel, the hotel can get an initial reputation in Booking.com even without a single rating entered in the website.

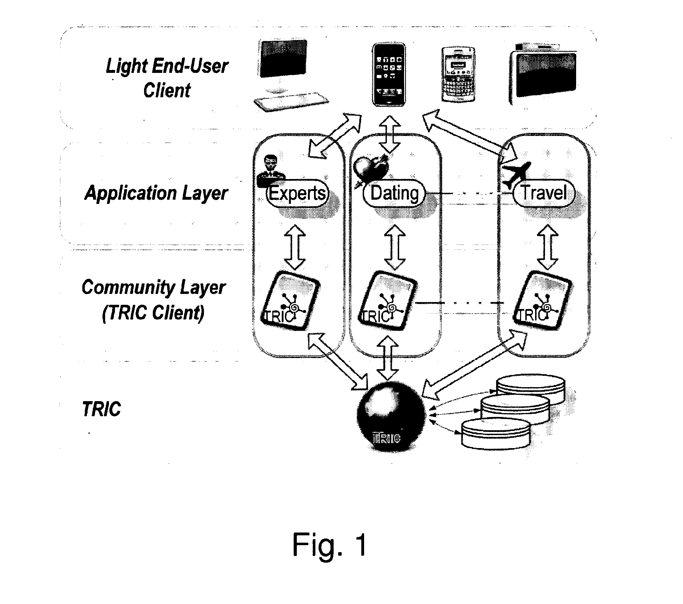

The CCR method described herein above is enabled by a computer and communication system referred to herein as TRIC. When discussing TRIC in the context of virtual communities four layers are considered: end-user client (community member), application layer (community), TRIC client, and TRIC Server. These four layers and the interactions between them are illustrated in Fig. 1.

- **End-user client** refers to the software application, which enables a user to display and interact with text, images, videos, music and other information located on the application layer, e.g. a web-browser based client.
- **Application layer** refers to the different applications (communities), where each application exposes its own graphic web pages, and its specific functionality, which is probably different from that of the other communities.

- **Community layer (TRIC Client)** provides the application with the necessary functionality required to manage a community. Specifically in the scope of the TRIC system, this module includes the interfaces to TRIC Services, e.g. T&R (trust and reputation) Services and CCR services. This module is embedded in the communities' application logic.
- **TRIC Server** is the part of the system that provides the communities with T&R and CCR services.

A TRIC operator manages an instance of the TRIC system and may provide CCR services to communities. The TRIC operator provides the registered communities with a TRIC client for both the CCR services and the T&R services (for computing internal reputation within the community). Once a community is registered to TRIC it uses a TRIC client to interface with the TRIC server. A Community should have the ability to determine the reputation of its users within the community. It may have its own T&R system for doing so or it can use a T&R service offered by TRIC.

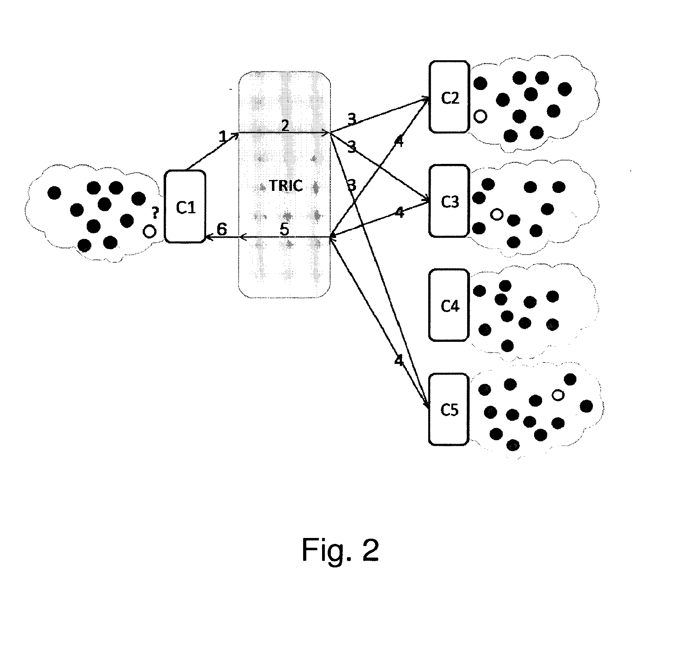

Fig. 2 schematically describes the CCR process using the TRIC system. The example in Fig. 2 shows a simplified internet network comprised of a TRIC server (labeled TRIC) and five virtual communities C1 to C5. The circles associated with each community represent the community members. The TRIC server represents a part of the system comprising one or more processors loaded with software that is especially adapted to carry out the method of the invention, memory units, input and output devices for electronically communicating with the server/computers of the relevant virtual communities and the members of those communities that constitute the remainder of the system of the invention, and input and output devices that enable the TRIC administrator to communicate with the components of the system for maintenance and upgrading of the software components.

The request for the CCR of an individual is handled by TRIC as follows:

- Step 1: A requesting community C1 sends TRIC a request for the CCR of a community member (represented by the open circle).
- Step 2: TRIC compiles a request.
- Step 3: TRIC submits the request to all potential responding communities. Note that the member of C1 in question is also a member of all other communities except C4, which does not receive a request from TRIC.
- Step 4: Responding communities submit a reputation object of the member in question.
- Step 5: TRIC processes all reputation objects and compiles a CCR object.
- Step 6: TRIC sends the CCR object to the requesting community.

It is important to understand that except for step 1 and step 4, all other steps of the process are carried out automatically, i.e. without human intervention, by the TRIC server.

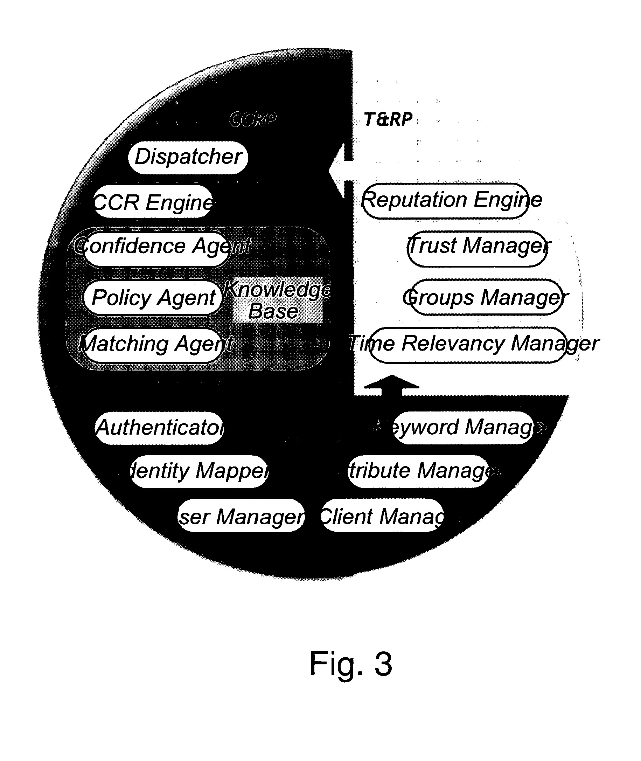

The core of the TRIC server is comprised of three building blocks that represent three fundamental services: *Registrar, T&RP* (Trust and Reputation Provider) and *CCRP* (Cross-Community Reputation Provider). The *Registrar* provides registration services for both users and TRIC clients, re: communities. The *T&RP* provides reputation computation services for obtaining the internal reputation of a user within a community. The *CCRP* provides cross-community reputation of registered users to registered communities. Fig. 3 symbolically shows the three building blocks of the TRIC server and a detailed description of these three services follows.

**Registrar**

The registrar is responsible for all aspects concerning registration and management of users and TRIC clients (communities). It also deals with authentication issues as will be further discussed herein below. The major building blocks of the registrar are depicted at the bottom of Fig. 3.

A community that wishes to participate in TRIC, i.e. to share reputation knowledge across communities and/or use the T&R services provided by TRIC should explicitly register to TRIC. The *Client Manager* is in charge of registration and management of clients (communities). As part of the registration process a community should provide information regarding the attributes it considers as reputation components (usually these are equivalent to the attributes used as a criteria for ranking transactions within the community). Generic attributes are maintained by the *Attribute Manager*. These attributes are derived from the attributes commonly used by the communities. Each community provides a mapping of its attribute in terms of the generic attributes.

In order to fully utilize CCR services, a community should provide a set of categories that best characterize it. Generic keywords correspond to categories commonly used by the participating communities to describe themselves, e.g. sports, travel. These categories are either pre-defined by the TRIC administrator or dynamically managed as an ontology within the *Keyword Manager*.

In addition, a community administrator should make some decisions with respect to information exchange alternatives. A detailed discussion of these decisions will be presented herein below.

Once a community is registered to CCR services, it can only participate in CCR activities for users that have explicitly expressed their consent by registering to TRIC. A community may redirect a user to register to TRIC but the actual registration is detached from the community. The *User Manager* is responsible for users' registration to TRIC. Registration to TRIC requires the user to provide TRIC with an identity established by an identity provider, e.g. MyOpenID [12]. Next, TRIC generates a pseudonym and sends it to the community as the shared pseudonym for further communication. As part of this process the user must give her consent to share her reputation as obtained in one community with other communities in which she is active.

When a user is redirected to TRIC from another community, she only has to provide her identification details (the same ones provided when first registered to TRIC). Once again the process is completed by a TRIC-generated pseudonym for further exchange of information about the user with this community. It is important to note that a community has no information with respect to the identity that the user provides to TRIC. Correspondingly, TRIC has no information with respect to the identity of the user within the community. The *Identity Mapper* module of the registrar manages the user's pseudonyms created for the different clients (communities).

The Authenticator is in charge of authenticating users with their existing identities from supported identity providers (e.g. MyOpenID [7]).

Note that the result of the above design is complete unlinkability between communities [7]. This means that no community will know the identity of a user in another community, nor will TRIC know the nick-name of the user that is used by a community. On the other hand, using a single identity within TRIC, will enable TRIC (or a legal entity using TRIC) to follow activities of abusers across communities.

**CCRP Module**

The CCRP module provides cross-community reputation computation services for all communities. The cross-community reputation represented by a CCR object is not unique for every member of TRIC. Two requesting communities may get different CCR objects for the same member even if these CCR objects were compiled based on input from the very same set of responding communities. This is due to potential differences in the confidence that the requesting communities have in each of the responding communities, in the CCR policies of the requesting communities, and in the policy of the member at subject.

The CCR Object is composed of the CCR final score and may additionally include a drill down view of the reputation components. If no restrictions are imposed, the CCR object contains information regarding the responding communities, the reputation objects received by each community including the values of each reputation attribute and possibly textual comments. However, this information is subject to the consent of both the member being the CCR subject and the responding communities.

The CCRP Module collects all information required for the CCR calculation, processes this information, and generates the CCR object. The major building blocks of the CCRP module are depicted at the top left side of figure 3.

The *CCR Engine* compiles the CCR object as described in equations 11 and 12. It performs the final computation of the CCR attributes, determines the CCR aggregated score, and produces other information as permitted by the CCR policies. The other components of the CCRP provide the CCR engine with the input required.

The *Knowledge Base* in Fig. 3 is a logical group of components that are responsible for collecting and processing data and provide the engine with the information required to conduct the CCR computation. It consists of the Confidence Agent, Matching Agent and Policy Agent, each responsible for a specific aspect of the CCR computation.

The *Confidence Agent* is responsible for updating explicit information from communities/users regarding their confidence in specific communities. This component is also responsible for computing the confidence level of one community in another community based on information provided by the Matching Agent. The *Matching Agent* is in charge of three major functionalities:

- Compute the extent to which one community matches another community based on information gathered from communities regarding their fields of interest (categories) and the domain of their reputation values (e.g. Boolean, real);
- Convert reputation values from one domain to another and scale reputation values based on statistic information; and
- Map the attributes of one community to the corresponding reputation in another community based on the mapping each community provides to the generic set of attributes.

A community may define its terms of playing the CCR game through policies. It can explicitly define its level of confidence in other communities. It can also restrict the transparency of the community from a CCR compiled using the data it provides. A community may prefer to provide information anonymously, i.e. in a way that will not enable a CCR viewer to track back and identify the source of information and even the identity of the user at subject. A user may also define her own terms for sharing her reputation data as obtained in one community with other communities. Like the community a user can restrict the transparency of the community, to ensure that her identity in that community remains obscured.

The *Policy Agent* is responsible for managing the CCR policy provided by the users and by the communities and evaluating the valid privacy rules for a specific CCR request.

Finally, the *Dispatcher* is responsible for composing all requests for reputation information from potential responding communities to a set of requests for CCR. This component performs the required optimization to minimize the number of requests/responses transmitted in this process (see section 5).

**T&RP Module**

The T&RP module provides trust and reputation computation services for TRIC clients. The T&RP module is independent of the CCRP, however in order to participate in TRIC CCR service, a community (TRIC client) must have some T&R system that obtains the reputation of community members.

TRIC clients can use this module for computing the reputation of users within the community. There are two alternatives for a community to use the T&RP module:

- Remote - a client pushes rating information to the T&RP which in turn calculates updated reputation values accordingly and submits the results back to the client. This can be done either on-demand or periodically. This alternative involves transfer of possibly large amounts of data
- Local - TRIC distributes the T&RP module to the TRIC client. The computation is done by directly accessing the community's database. This alternative involves download of T&RP algorithm upgrades when a new version is available

In what follows the major building blocks of the T&RP module are outlined considering the local alternative.

The four components of the T&RP correspond to essential aspects of reputation systems. In the present invention the T&RP service is demonstrated by using the Knot model [3] as the reputation computation model. The *Time Relevancy Manager* determines the temporal relevancy of each rating by giving it a weight which is incorporated in reputation calculations that are based on that rating. The weight decays with time so that more recent ratings have higher weights. This reflects the fact that newer ratings are more relevant and thus have more influence on the reputation value. The *Trust Manager* is responsible for calculating trust relations among members. In reputation systems the trust a member has in another as a source of information is used to weight the input provided by that source. In some systems this value is used to filter out input from untrusted users and to calculate transitive trust relations. In the group-oriented T&R systems and specifically in the Knot model this module also calculates a member's local reputation within her group of trust. The *Groups Manager* utilizes the relations obtained by the Trust Manager to generate and maintain groups of trust (knots). The *Reputation Engine* determines the final reputation score of a member based on the information available within the community. When using the Knot model, it determines the trust of a member in another based on direct experience or on the experience accumulated in her group of trust (local reputation within a knot). In addition, the Reputation Engine determines the reputation of a member as perceived by the community as a whole (global reputation). This global reputation is submitted as the community's response to a CCR request.

Note that each community may implement its own T&RP and still participate in the CCR computation by following the required API (Application Programming Interface) of the CCRP.

**Authorization and Authentication Requirements**

A key objective of the TRIC system is to achieve a robust system for reputation sharing while preserving the privacy of the reputation subjects, i.e. the users. A member of a community is encouraged to actively participate while keeping full control over her personal information. The reputation of a member within a community is private data that she may decide to share anonymously with members of other communities. To enable this sharing of information across communities, TRIC addresses two essential requirements. First, a community should get the user's explicit consent to share her reputation with other communities. In terms of service level it is unreasonable to require the user's on-line consent to every request for her CCR. However, the user's offline consent signed in advance, is required. This is actually an authorization the user grants TRIC to provide the community with her CCR in other communities, under the restrictions of her policy. This consent can be limited in time and requires preestablished key sharing between the community and TRIC at community registration time.

Next, the system must ensure that the reputation shared will not cause a linkage between a user's identity in one community and that user's identity in another community. When a user registers to a community she provides a virtual identity that can be authenticated either by the community (e.g., user-name and password) or by an identity provider (e.g., MyOpenId [7]). When first registering to TRIC the user should use a virtual identity provided by one of the identity providers supported by TRIC at registration time. This identity is used in the following times this user initiates registration to CCR services from a different community. The identity provider supported by TRIC and the identity providers supported by a community may be completely separate entities. This gives the system much flexibility and ability to incorporate existing communities into TRIC.

Basic requirements: TRIC should not be aware of the user's identity in the client (community), and vice versa it is required that the client will not be aware of the user's identity in TRIC. However, it is mandatory that TRIC and the client interact and refer to the same user. These requirements are addressed at the user registration phase.

Registration to TRIC, although redirected from the client, should be initiated by the user. The communities request/suggest to their members that they register with TRIC in order to allow the community to participate as either a requesting or responding community. The member is not forced to register but can initiate this action for example by clicking "register me to TRIC". Following this action by the user, the community submits the registration request to TRIC on behalf of the user. TRIC generates a pseudonym for the user, and passes it to the client (community) in order to provide TRIC and the community with a mutual identity of the user. From this point on, TRIC and the client use that pseudonym to identify the user. However, pseudonym generation is done only after the user has registered to TRIC using a third party identity provider and has explicitly given consent to the data sharing.

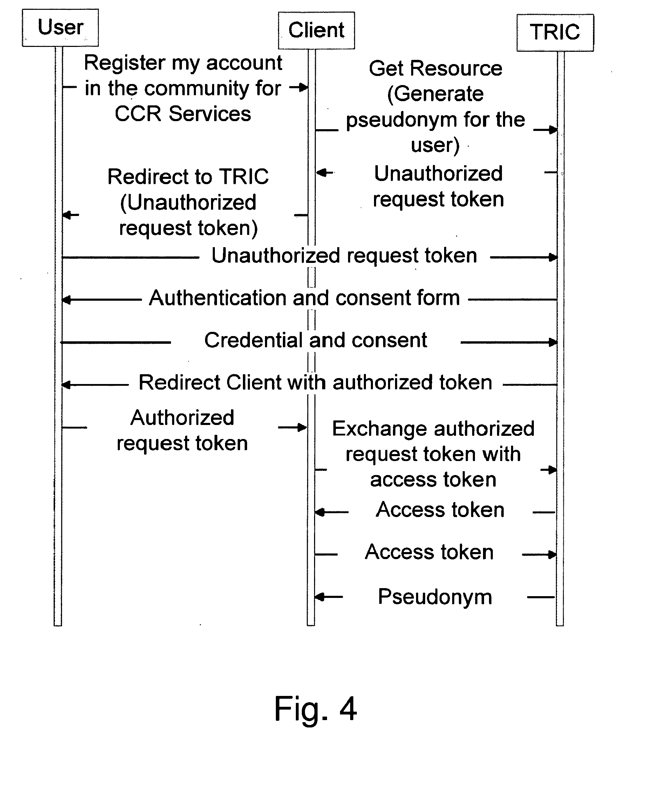

The user-registration process based on the OAuth protocol [18] as implemented in the current embodiment of TRIC is a long process that is schematically described by the sequence diagram in Fig. 4.

The OAuth protocol [8] is an example for a standard that meets the requirements of the invention. It allows the user to grant access to her private resources on one site (TRIC), to another site (the community). By granting access with OAuth the user does not have to share her identity at all. Apart from OAuth there are other protocols that can be used for exchanging user credentials for an access token (e.g., Google AuthSub, AOL OpenAuth, Yahoo BBAuth, Upcoming API, Flickr API, and Amazon Web Services API).

Although embodiments of the invention have been described by way of illustration, it will be understood that the invention may be carried out with many variations, modifications, and adaptations, without exceeding the scope of the claims.

### Bibliography

1. Pierpaulo Dondio, Luca longo, and Stephen Barrett. A translation mechanism for recommendations. In Proceedings of the 2nd Joint iTrust and PST Conferences on Privacy, Trust Management and Security (IFIPTM'08), pages 87-102, Trondheim, Norway, June 2008.

2. Nurit Gal-Oz, Tal Grinshpoun, Ehud Gudes, and Amnon Meisels. Cross-community reputation: Policies and alternatives. In IADIS International Conference on Web Based Communities (WBC2008), Amsterdam, The Netherlands, July 2008.

3. Nurit Gal-Oz, Ehud Gudes, and Danny Hendler. A robust and knot-aware trust-based reputation model. In Proceedings of the 2nd Joint iTrust and PST Conferences on Privacy, Trust Management and Security (IFIPTM'08), pages 167-182, Trondheim, Norway, June 2008.

4. Michael Kinateder, Ernesto Baschny, and Kurt Rothermel. Towards a generic trust model - comparison of various trust update algorithms. In iTrust, pages 177-192, 2005.

5. Franziska Pingel and Sandra Steinbrecher. Multilateral secure cross-community reputation systems for internet communities. In TrustBus '08: Proceedings of the 5th international conference on Trust, Privacy and Security in Digital Business, pages 69-78, Turin, Italy, 2008.

6. Isaac Pinyol, Jordi Sabater-Mir, and Guifr Cun. How to talk about reputation using a common ontology: From definition to implementation. In Proceedings of the Ninth Workshop on Trust in Agent Societies. Hawaii, USA, pages 90-101, 2007.

7. "MyOpenID." [Online]. Available: http://www.myopenid.com

8. OAuth." [Online]. Available: http://oauth.net/

### Claims

1. A method of converting and assembling reputation data from several virtual communities, to determine a Cross-Community Reputation (CCR), thereby enabling sharing of reputation knowledge across said communities, said method comprising three stages: preconditions, conversion of reputation values, and attribute matching; said method comprising the steps:

   a. sending a request from a community that wishes to receive CCR data regarding one of its users to relevant communities;

   b. receiving replies with the relevant reputation data from communities that have reputation data of said user and are willing to share the information;

   c. deciding upon the level of confidence said requesting community has in each of said responding communities;

   d. defining a set of generic attributes;

   e. converting the received reputation scores to the value domain of said requesting community;

   f. mapping the attributes and their corresponding scores from said responding communities to said set of generic attributes;

   g. mapping the attributes and their corresponding scores from said responding communities to fit the attributes of said requesting community;

   h. determining the certainty of each calculated attribute CCR value as a combination of the confidence levels and the matching levels of the communities' attributes; and

i. compiling the CCR data together.

2. The method of claim 1, wherein the communities communicate with each other through a trusted third party.

3. The method of claim 1, wherein the confidence one community has in another is determined by: Explicit Assertion, Category Matching level, and Domain Confidence.

4. The method of claim 3, wherein Explicit Assertions can be defined either:

   a. manually by an administrator; or
   b. automatically according to statistical information pointing out the significance of one community as a source of reputation for another community; or
   c. manually by a user.

5. The method of claim 1, wherein Explicit Assertions override any other confidence computation.

6. The method of claim 3, wherein the Category Matching level is determined by using either the Dice correlation or algorithms for document matching based on the vector space model.

7. The method of claim 1, wherein communities and users are enabled to define their own policies with respect to the level and type of information they are willing to reveal.

8. A computer and communication system comprising computing and communication devices adapted to enable the method of claim 1 for computing and exchanging trust and reputation in virtual communities to be automatically carried out;
   wherein the components of said system are collectively known as TRIC server, which is comprised of the following three building blocks:

   a. The Registrar, which is adapted to provide registration services for both users and communities;
   b. The Trust and Reputation Provider (T&RP), which is adapted to provide reputation computation services for obtaining the internal reputation of a user within a community; and
   c. The Cross-Community Reputation Provider (CCRP), which is adapted to provide cross-community reputations of registered users to registered communities.

9. The system of claim 8, wherein the TRIC server is adapted to automatically handle a request for the CCR of a user as follows:

   a. TRIC is adapted to receive a request from a requesting community for the CCR of a user;
   b. TRIC is adapted to compile a request to potential responding communities;
   c. TRIC is adapted to submit said request to all of said potential responding communities;
   d. TRIC is adapted to receive a reputation object of said user from responding communities;
   e. TRIC is adapted to process all of said reputation objects and to compile a CCR object; and
   f. TRIC is adapted to send said CCR object to said requesting community.

**Light End-User Client**

**Application Layer**
Experts   Dating   Travel

**Community Layer (TRIC Client)**
TRIC   TRIC   TRIC

**TRIC**
TRIC

Fig. 1

Fig. 2

Fig. 3

Fig. 4

| | Europäisches Patentamt European Patent Office Office européen des brevets | **EUROPEAN SEARCH REPORT** | Application Number EP 10 00 5320 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP" 20071101, 1 November 2007 (2007-11-01), XP007905525 * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * ----- | 1-9 | INV. G06Q10/00 G06Q30/00 TECHNICAL FIELDS SEARCHED (IPC) G06Q |

The present search report has been drawn up for all claims

| Place of search | Date of completion of the search | Examiner |
|---|---|---|
| The Hague | 16 August 2010 | Cîrstet, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Pierpaulo Dondio ; Luca longo ; Stephen Barrett.** A translation mechanism for recommendations. *Proceedings of the 2nd Joint iTrust and PST Conferences on Privacy, Trust Management and Security (IFIPTM'08),* June 2008, 87-102
- **Nurit Gal-Oz ; Tal Grinshpoun ; Ehud Gudes ; Amnon Meisels.** Cross-community reputation: Policies and alternatives. *IADIS International Conference on Web Based Communities (WBC2008),* July 2008
- **Nurit Gal-Oz ; Ehud Gudes ; Danny Hendler.** A robust and knot-aware trust-based reputation model. *Proceedings of the 2nd Joint iTrust and PST Conferences on Privacy, Trust Management and Security (IFIPTM'08),* June 2008, 167-182

- **Michael Kinateder ; Ernesto Baschny ; Kurt Rothermel.** Towards a generic trust model - comparison of various trust update algorithms. *iTrust,* 2005, 177-192
- **Franziska Pingel ; Sandra Steinbrecher.** Multilateral secure cross-community reputation systems for internet communities. *TrustBus '08: Proceedings of the 5th international conference on Trust, Privacy and Security in Digital Business,* 2008, 69-78
- **Isaac Pinyol ; Jordi Sabater-Mir ; Guifr Cun.** How to talk about reputation using a common ontology: From definition to implementation. *Proceedings of the Ninth Workshop on Trust in Agent Societies,* 2007, 90-101